# EUROPEAN PATENT APPLICATION

(11) **EP 2 325 048 A1**
(43) Date of publication of application: **25.05.2011**
(21) Application number: 09176424.1
(22) Date of filing: 19.11.2009
(51) Int. Cl.: B60R 5/04

(54) **Load floor arrangement for a vehicle**

(71) Applicant: Ford Global Technologies, LLC, Dearborn, MI 48126 (US)
(72) Inventor: Bernhardsson, Nils, 42343, Torslanda (SE)
(74) Representative: Widahl, Jenny Marie

(57) **Abstract**

1. A load floor arrangement (10) in a vehicle, the load floor arrangement (10) comprising a vehicle compartment floor (11), a load storage shelf (20) defining a substantially horizontal load carrying surface, and an pivot arrangement (30) for guiding the shelf (20) between at least a first position (A) and a second position (B), in which second position (B) the shelf (20) is located at an elevated position above the first position (A). The pivot arrangement (30) comprises at least two pivot bars (31) being arranged to guide the shelf (20) between the at least two said positions (A and B).

## Description

### TECHNICAL AREA

The present invention relates to a load floor arrangement in a vehicle, the load floor arrangement comprising a vehicle luggage compartment floor, a load storage shelf defining a substantially horizontal load carrying surface, and an pivot arrangement for guiding the shelf between at least a first position and a second position, in which second position the shelf is located at an elevated position above the first position.

### TECHNICAL BACKGROUND

The invention relates to a load floor arrangement for use in a vehicle, and in particular a load floor arrangement which provides a user with two alternative luggage and load carrying positions in a height level, which in fact defining two different load storage volumes.

The vehicle luggage compartment, e.g. the boot or the trunk of a vehicle is the volume being located rear the most rearward seat row. Typically, the vehicle luggage compartment is accessible by means of an up-and-over door.

Then the vehicle luggage compartment extends between the roof and the vehicle floor so that a significant height, and thereby trunk space is available for positioning and accommodating relatively larges items of luggage.

In order to accommodate different luggage positioning requirements, it has previously been shown arrangements providing vehicles with positionable load storage shelves which partitions the luggage compartment into at least two storage volumes, such as in EP1 728 684 A1.

However, the existing arrangements are severe to manoeuvre and often require a complicated two-hand operation. The reason is that the existing arrangements are usually positionable by means of complicated tracks and slots provided inside the interior of the vehicle luggage compartment. Furthermore, the shelf itself is space-requiring to store when not in use.

### SUMMARY OF THE INVENTION

It is therefore an object of the present invention to provide a load floor arrangement which provides a vehicle user with at least two alternative luggage carrying positions in a height level. It is a further object to maintain the available trunk space and to create different storing volumes for larger and smaller items during driving.

It is furthermore an object to improve the loading and unloading of large and heavy items due to the need to lower luggage onto the vehicle luggage compartment floor over the sill.

It is also an object to provide a load floor arrangement, where it is not necessary to remove the load storage shelf, avoiding complicated removal and re-installation processes, requiring the separated shelf to be stored elsewhere when not in use.

Finally, it is an object to provide an arrangement, which provide all the above mentioned objects but also provides such a load floor arrangement which is arranged to be operated by one-hand, i.e. user friendly and being ergonomically designed.

These objects are achieved in accordance with the present invention by means of a load floor arrangement in a vehicle, the load floor arrangement comprising a vehicle luggage compartment floor, a load storage shelf defining a substantially horizontal load carrying surface, and an pivot arrangement for guiding the shelf between at least a first position and a second position, in which second position the shelf is located at an elevated position above the first position as claimed in claim 1, wherein the pivot arrangement comprising at least two pivot bars being arranged to guide the shelf between the at least two said positions.

By means of the inventive load floor arrangement, complicated tracks and slots provided inside the interior of the vehicle luggage compartment, for guiding the load storage shelf, are eliminated. Advantageously, the inventive load floor arrangement is easily manoeuvred by one hand.

According to a first preferred embodiment of the invention, a first end of the pivot bars or the pivot arm are connected with the vehicle luggage compartment floor, and a second end of the pivot bars are connected with the load storage shelf. In this way, the shelf can be pivoted between at least two positions in height level. In an alternative embodiment of the invention, the first end of the pivot bars may be connected to a vehicle sill or another vehicle interior part.

Preferably, the inventive pivot bars are arranged in connection to each of two opposite end surfaces of the underside of the shelf, running along the longitudinal direction of the vehicle. Advantageously, this provides a good stability of the pivoting movement. Furthermore, the pivot bars may alternatively be connected to the under or upper side surface of the shelf. In still an alternative embodiment of the invention, more than two pivot bars are arranged between the vehicle luggage compartment floor and the shelf.

In greater detail, in the first preferred embodiment, said first end of the pivot bar is pivotably connected to the vehicle compartment floor in a first pivot point, and said second end of the pivot bar is both pivotable and linearly movable along the load storage shelf. More preferably, a spring is arranged to each of the two pivot bars. The spring has a first and a second end, of which the first end is attached to the shelf, and the second end is pivotably connected to the second end of the pivot bar. Consequently, in this way the second end of the pivot bar and the second end of the spring advantageously constitute a second pivot point. By means of the invention, said spring is arranged to apply forces on the second end of the pivot bar in order to pivot said pivot bar when the shelf is moved from the first position to the second position, and reverse. In even greater detail, the second end of the spring is advantageously linearly movable back and forward along the shelf when the spring is slacked and tensioned, respectively, applying forces to the second end of the pivot bar.

In the first embodiment of the invention, a rail being arranged onto each of the two opposite end surfaces of the underside of the shelf. Advantageously, the spring is linearly movable inside the rail as the spring is tensioned and lacked inside the rail. Alternatively, the rail may be arranged on the side surfaces or upper surface of the shelf. In still an alternative embodiment of the invention, the spring is arranged in an oblonged recess of the shelf. The recess could be arranged in a side, upper or under surfaces of the shelf.

In the first embodiment of the invention, the load floor arrangement comprises a first and a second support, supporting the shelf in the first and the second positions in the at least two height levels, respectively. The first support is arranged as a pivot for the rear side end surface of the shelf when positioned in the first position, and the second support is arranged as a second pivot for the shelf when the shelf is positioned in the second position.

Preferably, the first support is constituted of the vehicle luggage compartment floor itself, a shelf, a sill or the like. Preferably, the second support is constituted of a shelf, sill, or the like, being located at an elevated position above the first support. The first and the second support are preferably located in the rear of the luggage comportment and cooperating with corresponding supports on or next to the sill in the front of the luggage compartment.

### BRIEF DESCRIPTION OF THE DRAWINGS

The invention will be described in the following by way of example only and with reference to the embodiments illustrated in the drawings, in which
- Fig. 1a: shows a perspective view of the load floor arrangement in a first position A,
- Fig 1b: shows a side view of the load floor arrangement in a first position A,
- Fig. 2a: a perspective view of the load floor arrangement when tilting the shelf
- Fig. 2b: shows a side view of the load floor arrangement when tilting the shelf
- Fig. 3a: a perspective view of the load floor arrangement when lifting the shelf
- Fig 3b: shows a side view of the load floor arrangement when lifting the shelf
- Fig 4a: a perspective view of the load floor arrangement in a second position B, and
- Fig. 4b: shows a side view of the load floor arrangement in a second position B

### DETAILED DESCRIPTION OF PREFERRED EMBODIMENTS

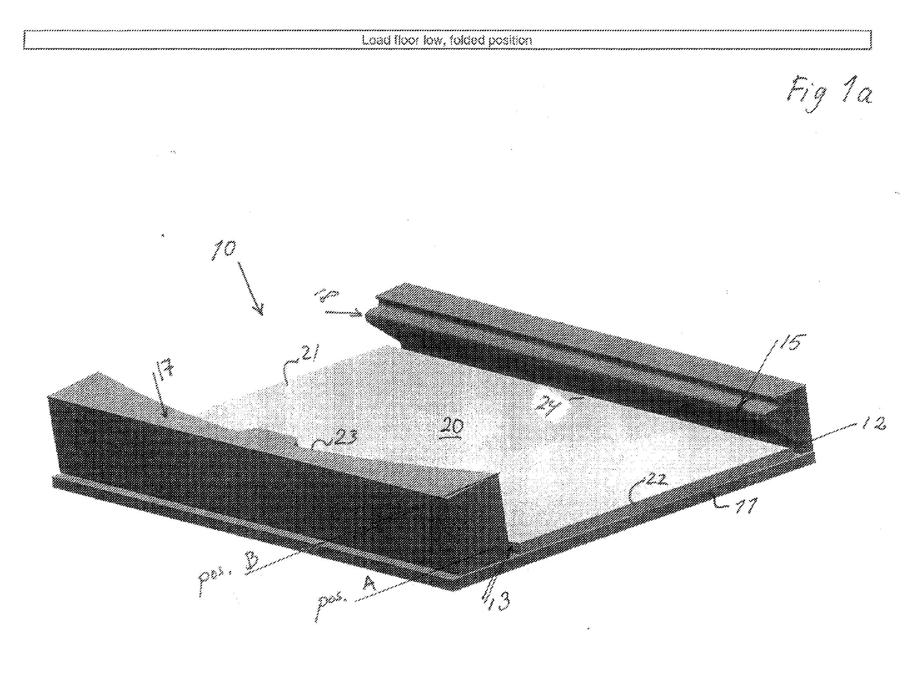

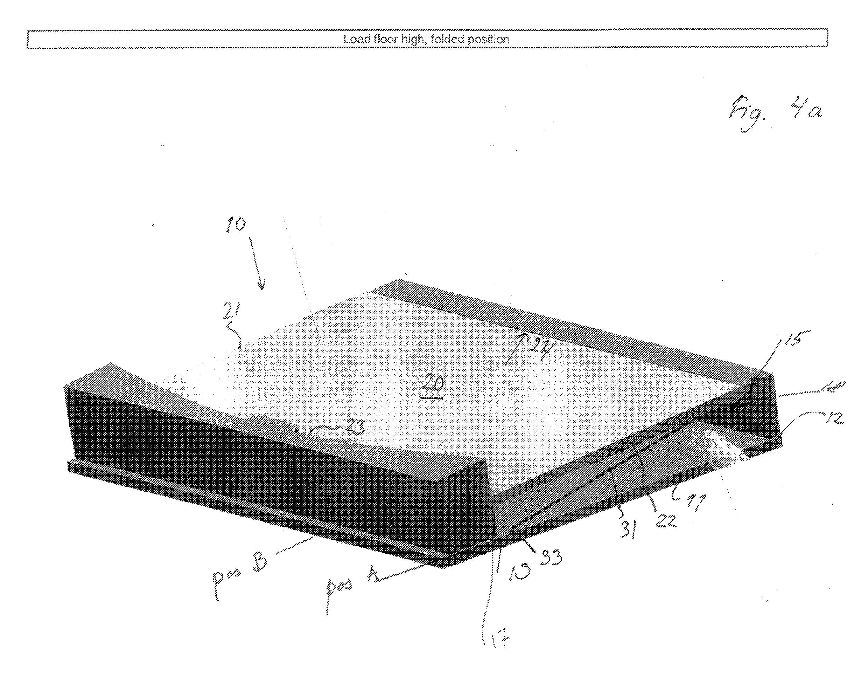

In the drawings, reference numeral 10 generally denotes a load floor arrangement for guiding a load storage shelf 20, constituting an additional load floor, in a vehicle luggage compartment between at least a first position A and a second position B in different height levels, see Figs. 1a and 4a.

In Fig. 1a the load storage shelf 20 is shown, which is hereinafter called "shelf" 20.

The shelf 20 is preferably quadrangular having four side end surfaces 21, 22, 23 and 24, of which two side end surfaces 21 and 22 are substantially parallel with the longitudinal direction of the vehicle, and a front 23 and a rear side surface 24 are substantially parallel with the lateral direction of the vehicle.

In the first position A, the shelf 20 is preferably positioned onto the vehicle luggage compartment floor 11 (hereinafter denoted "vehicle floor 11 "). Then the front side surface 23 of the shelf 20 is located against the base end of the vehicle floor 11, next to the rear sill 17 of the hatch or trunk door. Further, the rear side surface 24 of the shelf 20 is located next to the back of the rear seat row.

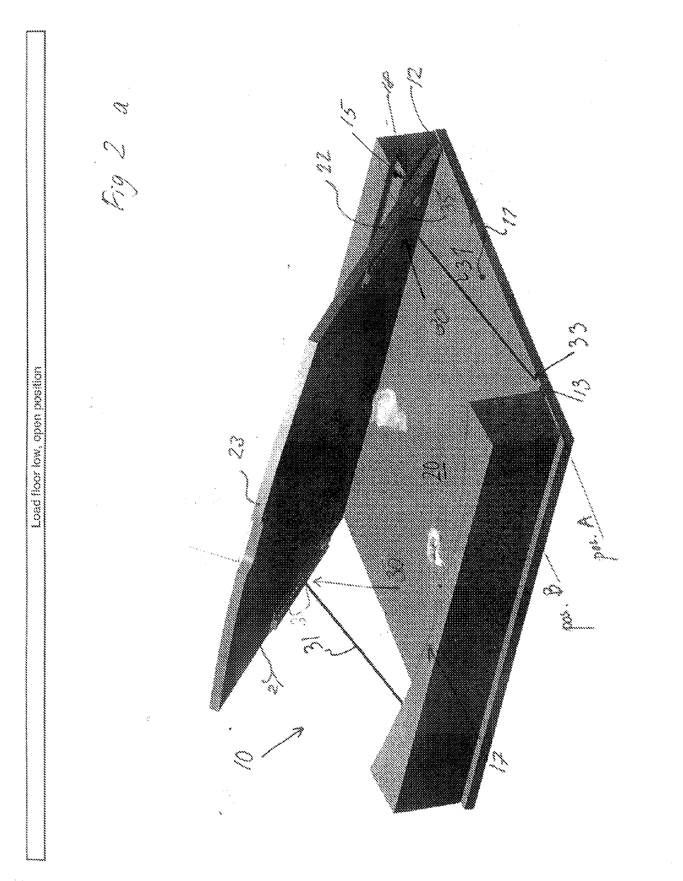

As can be seen in Fig. 2a, when the shelf 20 is in a tilted position thereof, the part of the vehicle floor 11 adjoining the back of the rear seat row constitutes a first support 12 for the shelf 20. According to the invention, the shelf 20 is movable from position A to position B by means of a pivot arrangement 30 comprising two pivot bars 31 being arranged to guide the shelf 20 between position A and B. For obtaining a good stability, the pivot bars 31 are connected to the opposite side end surfaces 21 and 22 of the underside of the shelf 20. Then the two pivot bars 31 are in a first end 33 connected with the vehicle floor 11, and in a second end 35 connected to the shelf 20.

Furthermore, the shelf 20 is provided with a handle 50 for guiding the shelf 20 between said positions A and B.

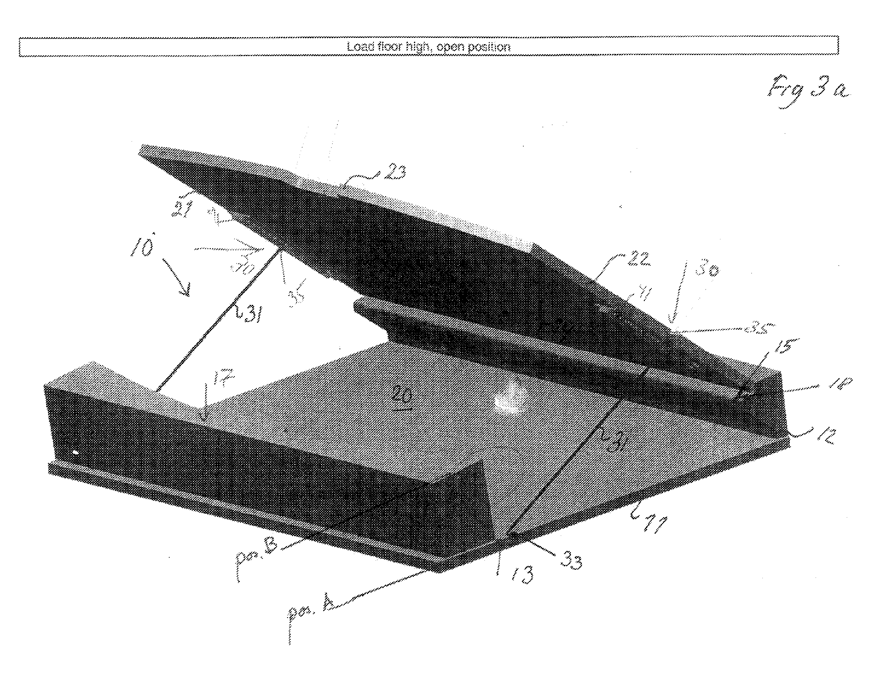

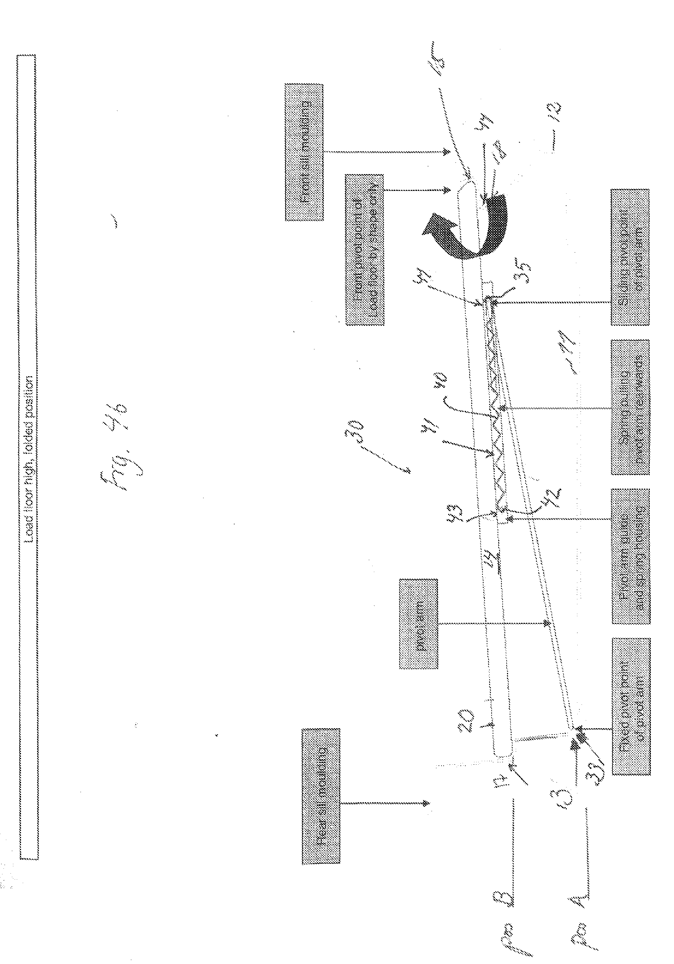

As can be seen in Figs. 3a, when the shelf 20 is tilted in position B, the second support 15 for the shelf 20 is constituted of the sill, or the like, being located at an elevated position above the first support 12. Between the two support points 12 and 15, a bulge 18 is provided. When the shelf 20 finally is brought to the substantially horizontal position B the front surface 23 of the shelf 20 rests on a part of the rear sill 17 of the hatch or trunk door, see Fig 4b.

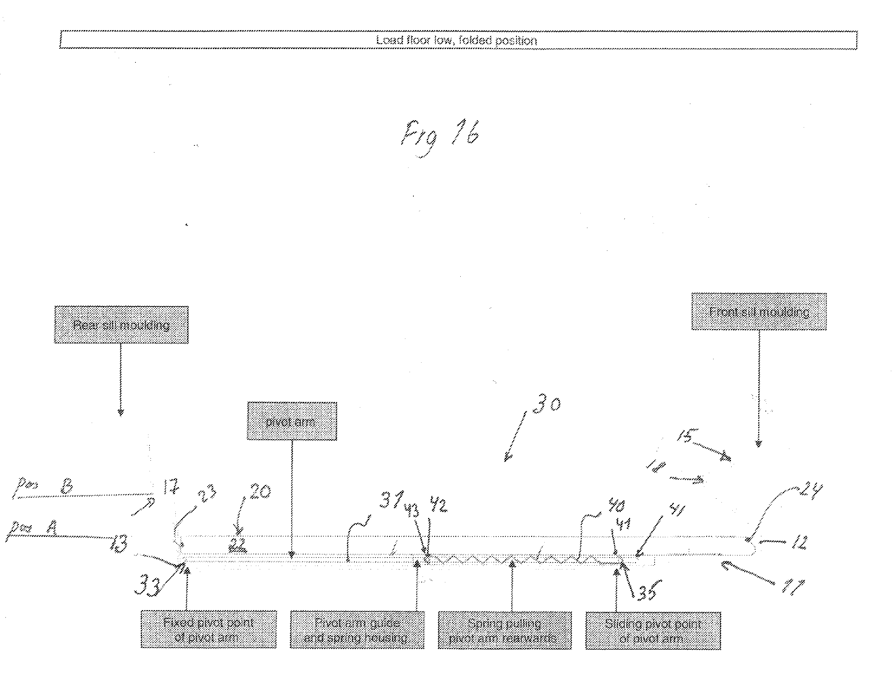

A rail 41 will be arranged onto the side end surfaces 21 and 22 of the underside of the shelf 20, see Fig. 2a and 1b. The part of the pivot arrangement 30 arranged onto one of the side end surfaces 21 and 22 and in connection to one of the rails 41 thereof will now be described in the following, se Fig. 1b.

A spring 40 is arranged into the rail 41. The spring 40 have a first 42 and a second 44 end, of which the first end 42 is attached to the shelf 20 inside the rail 41 in one end thereof, and the second end 44 is pivotably connected to the second end 35 of the pivot bar 31, linearly movable back and forward inside the rail 41.

In greater detail, the first end 33 of the pivot bar 31 is pivotably connected to the vehicle floor 11 in a first pivot point 13, which is preferably located at the vehicle floor 11 next to the sill 17 of the trunk. The second end 35 of the pivot bar 31 is pivotably movable in connection to the second end 44 of the spring 40 arranged into the rail 41. Thus, the second end 44 of the spring 40 constitutes a second pivot point 44.

At the same time, the second end 35 of the pivot bar 31 is also linearly movable along the shelf 20 since the second end 44 of the spring 40 being arranged to be linearly movable back and forward inside the rail 41 along the shelf 20 as the spring 40 is slacked and tensioned, respectively, applying forces to the second end 35 of the pivot bar 31. In this way, said spring 40 is arranged to apply forces on the second end 35 of the pivot bar 31 1 in order to pivot said pivot bar 31 when the shelf 20 is to be moved from the first position A to the second position B, and reverse.

The operation of the inventive guiding arrangement will now be described in the following. In order to position the load floor arrangement 10 into the second luggage carrying position B, the shelf 20 is guided by means of the sequence of steps shown in la, 2a, 3a and 4a, and the corresponding steps for the pivot arrangement 30 are shown in greater detail in Figs. 1b, 2b, 3b and 4b (which figures only show one side configuration of the shelf 20 and the pivot arrangement 30). As will be described, the load floor arrangement comprises several pivoting mechanisms, which is described in all the steps.

Initially, the load floor arrangement 10 is located in the first luggage carrying position A, see Figs. 1a and 1b. Then luggage and items can be placed upon the shelf 20 and an accommodation space, or volume, of relatively large height is made available for luggage and items positioned onto the shelf 20. In this configuration, the pivot bars 31 are substantially positioned in parallel with the two side end surfaces 11 and 22 of the shelf 20, see Fig 1b. The springs 40 are then in a tensioned state thereof.

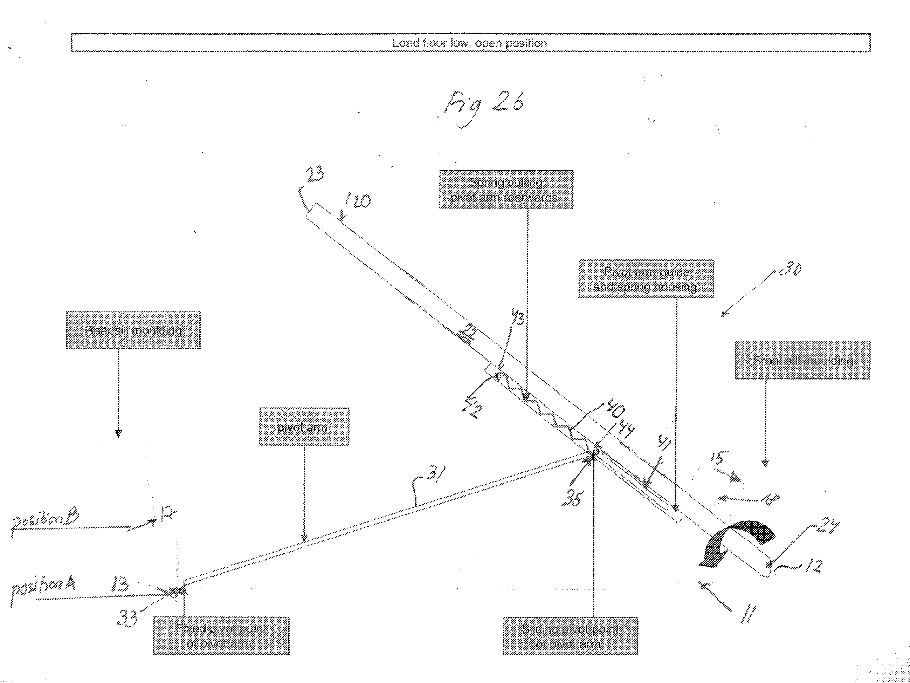

In Figs. 2a and 2b, the front edge 23 of the luggage shelf 20 is lifted by pulling the handle 50 upwardly so that the shelf 20 is tilted relative to the vehicle floor 11 as the rear surface 24 of the shelf 20 rests in the first support 12 as the shelf 20 pivots clockwise. Then the pivot bar 31 is caused to pivot anti-clockwise around the first pivot point 13, at the same time as the pivot bar 31 is caused to pivot clockwise around the second pivot point 44, see Fig 2b. At the same time, the second end 44 of the spring 40 is also linearly moved in the rail 41 towards the first end 42 of the spring 40. Consequently, the spring 40 is slacked and thereby less tensioned in the described tilted position of the shelf 20, which is shown in Fig. 2b.

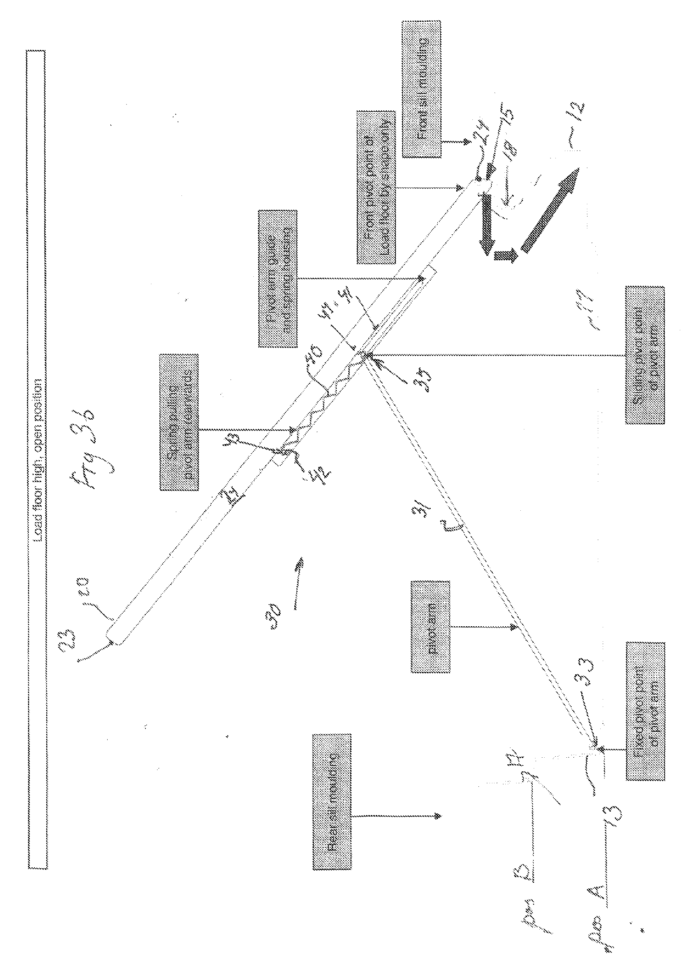

Referring now to Figs. 3a and 3b, the user pulls the handle 50 further in an upward direction and thereby lifts the shelf 20, and moves the rear side end surface 24 of the shelf 20 from the first support 12 around the bulge 18 to the second support 15, located at a higher height level than the first support 12, see Fig. 3b. In the described movement over the bulge 18, the pivot bars 31 slightly pivot anti-clockwise around the pivot point 33, at the same time as the pivot bars 31 slightly pivot clockwise around the second pivot point 44 at the second end of the spring 44, see Fig 2b. At the same time, said second end 44 of the spring 40 is also linearly moved slightly in the rail 41 towards the first end 42 of the spring 40. Consequently, the spring 40 is still slacked in the tilted position of the shelf 20 as shown in Fig. 3b.

Referring to Figs. 4a and 4b, the user finally guides the shelf 20 into the second elevated, horizontal position B by bringing the handle 50 in a downward direction so that the front side end surface 23 of the shelf 20 rests on a part of the sill 17, constituting a corresponding support for shelf 20 cooperating with the second support 15.

As can be seen in Fig 4b, as the user brings the shelf 20 downwards, the shelf 20 is pivoted counter clockwise around the second support 15. Then the pivot bar 31 is caused to pivot clockwise around the first pivot point 13, at the same time as the pivot bar 31 is caused to pivot counter clockwise around the second pivot point 44.

At the same time, the second end of the spring 40 is linearly moved in the rail 41 away from the first end 42 of the spring 40 so that the spring 40 is tensioned once again, see Fig. 4b, similar to the configuration in Fig 1b. The shelf 20 is once again horizontally oriented and now located in the second position B.

In position B, the shelf 20 is elevated above the vehicle floor 11 so as to partition the luggage compartment floor 11 into two separate volumes, i.e. an upper luggage compartment above the shelf 20 and a lower luggage compartment beneath the shelf 20. In this way, the available luggage volume of the vehicle luggage compartment may be optimised for luggage and items of different volumes.

It will be appreciated that such a tilting and lifting of the inventive load floor arrangement 10 is easily performed by a single handed operation, facilitated by the pivot arrangement 30 comprising the described pivot bars 31 arranged on the side end surfaces of the underside of the shelf 20.

In order to move the shelf 20 back into the lower position A, in which the shelf 20 rests upon the vehicle floor 11, a sequence of steps as described previously is followed in reverse.

The invention has been described above and illustrated in the drawings by way of example only and the skilled person will recognize that various modifications may be made without departing from the scope of the invention as defined by the appended claims.

## Claims

1. A load floor arrangement (10) in a vehicle, the load floor arrangement (10) comprising a vehicle compartment floor (11), a load storage shelf (20) defining a substantially horizontal load carrying surface, and an pivot arrangement (30) for guiding the shelf (20) between at least a first position (A) and a second position (B), in which second position (B) the shelf (20) is located at an elevated position above the first position (A), **characterised in that** the pivot arrangement (30) comprising at least two pivot bars (31) being arranged to guide the shelf (20) between the at least two said positions (A and B).

2. A load floor arrangement as claimed in claim 1, wherein a first end (33) of the pivot bar (31) is connected with the vehicle compartment floor (11), and a second end (35) of the pivot bar (31) is connected with the load storage shelf (20).

3. A load floor arrangement as claimed in claim 2, wherein said first end (33) is pivotably connected to the vehicle compartment floor (11), and said second end (35) is pivotable and linearly movable along the load storage shelf (20).

4. A load floor arrangement as claimed in any of the preceding claims, wherein the at least two pivot bars (31) are arranged in connection to two opposite end surfaces (14) of the shelf (20).

5. A load floor arrangement as claimed in any of the preceding claims, wherein the pivot arrangement (30) comprises at least one spring (40) arranged to cooperate with the pivot bar (31).

6. A load floor arrangement as claimed in claim 5, the spring (40) having a first (42) and a second (44) end, of which the second end (44) is pivotably connected to the second end (35) of the pivot bar (31), and the first end (42) is attached to the shelf (20).

7. A load floor arrangement as claimed in claim 5 or 6, wherein said spring (40) applies a force on the second end (35) of the pivot bar (31) in order to pivot said pivot bar (31) when the shelf (20) is moved from the first position (A) to the second position (B) and reverse.

8. A load floor arrangement as claimed in claim 6 or 7, wherein the second (44) end of the spring (40) is linearly movable back and forward along the shelf (20) when the spring (40) is slacked and tensioned, respectively, applying forces to the second end (35) of the pivot bar (31).

9. A load floor arrangement as claimed in one of the claims 5 - 8, wherein the spring (40) is arranged in a rail (41), which in turn is arranged in connection to at least one side surface (14) of the shelf (20).

10. A load floor arrangement as claimed in one of the claims 5 - 8, wherein the spring (44) is arranged in an oblonged recess of the shelf (20).

11. A load floor arrangement as claimed in one of the preceding claims, wherein the load floor arrangement (10) comprises a first (12) and a second support (15), supporting the shelf (20) in the first (A) and the second positions (B), respectively.

12. A load floor arrangement as claimed in claim 11, wherein the first (12) and second (15) supports are arranged as pivot points for the shelf (20) when the shelf (20) is moved between the first position A and the second position B, and reverse.

13. A load floor arrangement as claimed in claim 11 or 12, wherein the first support (12) is constituted of the vehicle luggage compartment floor (11), a sill or the like.

14. A load floor arrangement as claimed in one of the claims 11 - 13, wherein the second support (15) are constituted of another shelf of the vehicle, sill, or the like, being located at an elevated position above the first support (12).

15. A load floor arrangement as claimed in one of the claims 11 - 14, wherein the first (12) and the second support (15) preferably are located in the rear of the luggage comportment and cooperating with corresponding supports (13 and 17) in the front of the luggage compartment.
